# EUROPEAN PATENT APPLICATION

(11) **EP 2 538 522 A1**
(43) Date of publication of application: **26.12.2012**
(21) Application number: 11744744.1
(22) Date of filing: 18.02.2011
(51) Int. Cl.: H02J 7/35, B60L 8/00, B60L 11/18, H01M 10/44, H02J 7/00, H02J 7/02

(54) **POWER SUPPLY SYSTEM AND ELECTRIC VEHICLE**

(30) Priority: 19.02.2010 JP 2010034942
(71) Applicant: Honda Motor Co., Ltd., Minato-ku Tokyo 107-8556 (JP)
(72) Inventor: OHNUKI Yasumichi, Wako-shi Saitama 351-0193 (JP)
(74) Representative: Herzog, Markus
(86) International application number: PCT/JP2011/053493
(87) International publication number: WO 2011/102458

(57) **Abstract**

When an ignition switch is turned off, a power supply system (1) turns off a second switch (SW2) to block the supply of power from a 12V-battery (LB) to an equalization circuit and turns on a first switch (SW1) to supply power from a solar cell unit (11) to the equalization circuit. In the power supply system (1), even when a vehicle is left over a long period of time, the voltages of the respective unit cells of a high-voltage battery (HB) are equalized and even when the ignition switch is turned off, the voltages of the unit cells constituting the assembled battery are appropriately equalized.

## Description

### TECHNICAL FIELD

The present invention relates to a power supply system or the like which can be applied to a circuit for performing leveling or the like for a voltage of each of single cells forming a battery pack (high voltage battery).

### BACKGROUND ART

Recently, electric vehicles in which a motor is installed and hybrid vehicles in which both engine and motor are installed have attracted attentions. These vehicles also include a secondary battery for storing an electric power to be supplied to the motor for travelling. These secondary batteries are formed as a battery pack including a lot of single cells of, for example, lithium ion batteries in combination. It is desirable that a voltage of each of the single cells forming the battery pack is even (leveled). However, voltages of respective single cells may have different values due to individual differences between the single cells, nonuniformity in temperature, etc. within a box housing the battery pack.

From the aforementioned descriptions, a leveling circuit for adjusting voltages of the respective single cells to level the voltages of the respective single cells is known. "A charge and discharge device" in Patent document 1 filed by the inventor of this application is known as the leveling circuit. According to Patent document 1, the voltages of the respective single cells can be leveled (normalized) such that one single cell (module) having a higher voltage is discharged and another single cell having a lower voltage is charged. In addition, the technology of Patent document 1 was made in which an operation power supply had been studied for the leveling circuit (charge and discharge circuit) for each of the single cells. The operation power supply for the leveling circuit is not a high voltage power supply (battery pack), but a low voltage power supply (battery of 12 volts) to avoid power leakage from the battery pack in the vehicle not operating.

### [Prior Art]

### [Patent Documents]

[Patent Document 1] JP 2009-165206 A

### DISCLOSURE OF THE INVENTION

### [Summary of Invention]

### [PROBLEMS TO BE SOLVED BY THE INVENTION]

However, even while the vehicle is not operating, i.e., an ignition switch is OFF, in the battery pack, self discharge or the like necessarily occurs. The self discharge increases dispersion in voltage among the respective single cells, which may invite decrease in SOC (Status Of Charge) at the next operating the vehicle or run out of charge (corresponding to run out of fuel). More specifically, in Patent document 1, the power supply for operating the leveling circuit was studied. However, there is still a potentiality in improvement for time while the ignition switch is OFF.

Accordingly, the present invention aims to provide a power supply system or the like capable of adequately leveling voltages of the respective single cells forming a battery pack (high voltage battery) even when the ignition switch is OFF.

### [MEANS FOR SOLVING THE PROBLEM]

To achieve the aforementioned aim, the inventor has studied hard and completed the present invention in which the aforementioned problem can be solved by using solar cells for the respective single cells. That is, the present invention that has solved the aforementioned problem (claim 1) is a power supply system for a vehicle which includes: a high voltage battery, including a plurality of single cells in combination capable of being charged for supplying an operation power to a motor for travelling, a low voltage battery for supplying an operation power for a control unit and an accessory electrical unit, and a leveling circuit for averaging the voltages of the respective single cells having dispersion in the high voltage battery.

This power supply system includes:
(1) a solar cell on a vehicle;
(2) a regulator for adjusting a voltage of the solar cell to be approximately equal to a voltage of the low voltage battery;
(3) a converter for converting an output voltage of the regulator and the output voltage of the low voltage battery into the operation voltage of the averaging circuit; and
(4) a connection circuit for connecting the solar cell to the low voltage battery in parallel through the regulator as well as connecting the solar cell to the leveling circuit through the converter disposed on a side downstream from a junction point between the low voltage battery and the solar cell through the converter.
The configuration is provided to enable the solar cells to supply an electric power to the leveling circuit when the startup switch for the vehicle is OFF, i.e., inactive.

According to this configuration, while the vehicle is inactive (when the ignition switch is OFF), when the solar cells generate an electric power, the electric power is supplied to the leveling circuit to level the voltages of the respective single cells in the high voltage battery.

In addition, the present invention (claim 2) that has solved the aforementioned problem, in the invention of claim 1, (1) a connection circuit includes a first switch for connecting to and disconnecting the leveling circuit from the solar cells, and (2) the electric power is supplied from the solar cells to the leveling circuit by controlling the first switch when the vehicle is inactive and the solar cells generate the electric power.

According to this configuration, because the control circuit switches the first switch, the electric power is supplied to the leveling circuit from the solar cells. In addition, a current flow from the low voltage battery to the solar cells (reverse flow) is avoided.

In addition, in the present invention (claim 3) that has solved the aforementioned problem, in the invention as claimed in claim 1 or 2, the solar cell is installed an exterior top face of the vehicle. The high voltage power supply unit including a high voltage battery, a converter, and the leveling circuit and further including a low voltage power supply input terminal is installed in a cabin of the vehicle such as at a trunk part or on or under a floor face of the vehicle. The solar cell is connected to the high voltage power supply unit with a low voltage circuit unit with a low voltage wirings grounded to the body of the vehicle.

According to the configuration, the solar cells are arranged at a place where it is possible to sufficiently receive the sun ray. On the other hand, the high voltage battery is arranged in a lower portion of the vehicle, because it is superior for weight balancing. In addition, the solar cells on a top exterior of the vehicle is connected to the high voltage battery with a low voltage circuit grounded at the body of the vehicle, a higher degree of freedom in wiring or the like is provided than the high voltage circuit, so that a protection member for protecting wirings can be saved.

In addition, in the present invention (claim 4) that has been solved the aforementioned problem, the converter is of an isolated type DC-DC converter in any of claims 1 to 3.
According to the configuration, isolation between the high voltage part and the low voltage part can be surely provided.

In addition, the present invention that has solved the aforementioned problem (claim 5) is an electric vehicle including the power supply system of any of claims 1 to 3.
According to the configuration, even while the electric vehicle is left for a long period with the ignition switch being turned OFF, leveling the respective single cells in the high voltage battery can be performed with the sun light.

### [Advantageous Effect]

According to the present invention, regarding the operation power supply for the leveling circuit, a power supplying system capable of adequately leveling the voltages of the respective single cells forming the battery pack even when the ignition switch is OFF can be provided.

### BRIEF DESCRIPTION OF DRAWINGS

Figs 1A and 1 B are drawings for describing the embodiments of the present invention, wherein Fig. 1A illustrates an outline configuration of an electric vehicle in which a power supply system is installed and Fig. 1 B illustrates an outline configuration of the high voltage unit.
Fig. 2 is a drawing illustrating an outline configuration of the power supply system of the electric vehicle including the power supply system.
Fig. 3 is a drawing of an outline configuration illustrating a modification example that is different from the embodiment shown in Fig. 2.

### [MODE FOR CARRYING OUT THE INVENTION]

Hereinbelow, with reference to the attached drawings will be described in detail embodiments of the power supply system and an electric vehicle of the present invention (hereinafter referred to as "embodiments").

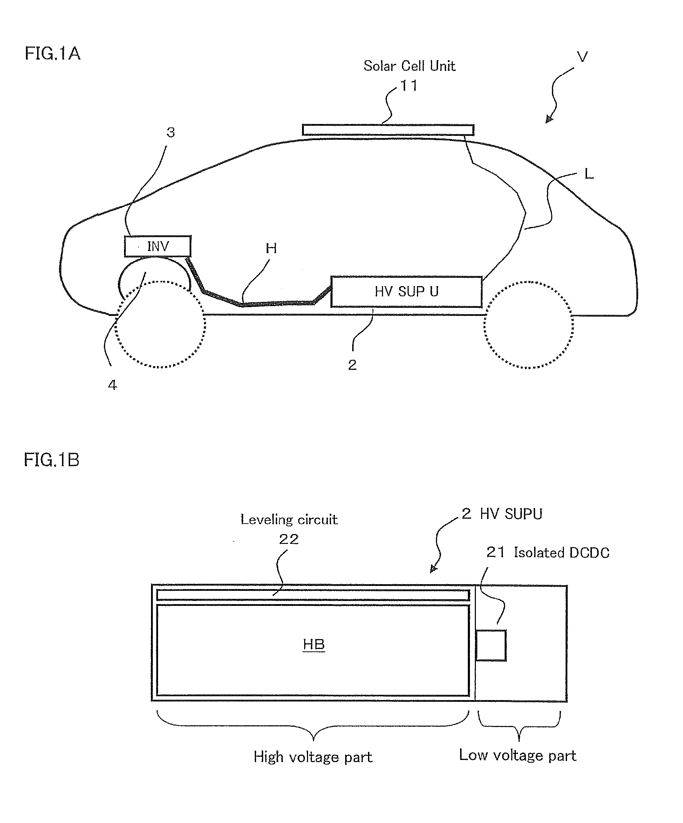

With reference to Figs. 1A and 1 B, will be described configuration of a vehicle according to the embodiments of the present invention. In the description below, the vehicle V is an electric vehicle. However, the power supply system 1 is applicable to the vehicle other than the electric vehicle such as a hybrid vehicle (plug-in hybrid vehicle), or a fuel cell electric vehicle as long as the vehicle is one in which a high voltage battery HB is installed.

### (Configuration of Vehicle)

As shown in Fig. 1A, the vehicle V according to the embodiment carries a solar cell unit 11, a high voltage power supply unit 2, an inverter 3, and a traction motor 4, etc. Regarding layout of the devices, the solar cell unit 11 is disposed on a top exterior face of the vehicle V to sufficiently receive the sun light. In the example in Fig. 1A, the solar cell unit 11 is disposed on the roof of the vehicle V. However, the solar cell unit 11 may be disposed on a bonnet. In addition, the solar cell unit 11 can be installed within a cabin of the vehicle, for example, under a front window (on a dash board), or under a rear window, etc. though the sun light passes through a window. If the solar cell can be formed integrally with the window, it may be possible that the window serves as the solar cell unit 11.

In addition, regarding a layout of the devices, the high voltage power supply unit 2 is disposed at a lower part of the vehicle V in consideration of weight balance. The high voltage power supply unit 2 is connected to the solar cell unit 11 with a low voltage wiring L (a low voltage circuit) grounded at the body of the vehicle, the high voltage power supply unit 2 is connected to the inverter 3 with a high voltage wiring H. More specifically, as shown in Fig .1A, the inverter 3 is connected to the high voltage power supply unit 2 with the high voltage wiring H as well as the other end side is connected to the traction motor 4 with a three-phase high voltage connection (not shown).

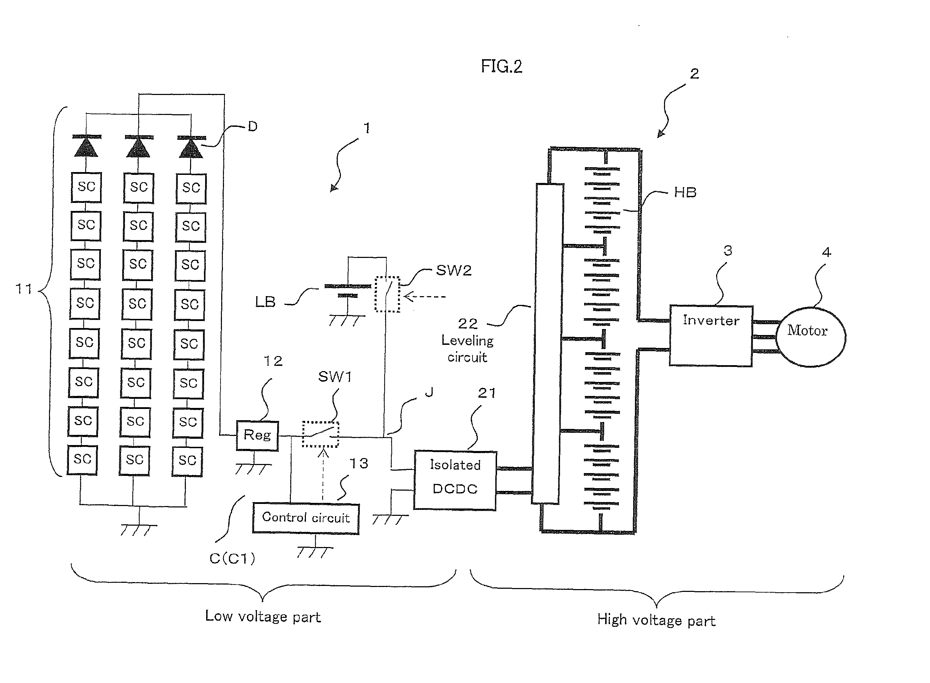

Details of the solar cell unit 11 and the power supply system 1 (see Fig. 2) will be described after the high voltage unit 2 is described.

### (High voltage unit)

In addition, as shown in Fig 1 B, the high voltage power supply unit 2 includes a high voltage battery (battery pack) HB, an isolated type of DC-DC converter (converter) 21, a leveling circuit 22, etc. The isolated type of DC-DC converter 21 has such a configuration that a high voltage part and a low voltage part are isolated. Regarding this, the high voltage part deals a voltage of a hundred to several hundreds volts. The lower voltage part deals a low voltage of (around 12 to 24 V) corresponding to the voltage in the 12-V battery (low voltage battery) LB. Regarding this, the high voltage part is isolated from metal parts (voltage conduction member) forming the vehicle V. On the other hand, the low voltage part is grounded to a metal member (conductive substance) forming the vehicle V.

In addition, the high voltage battery HB is formed as a battery pack for a high voltage of about several hundreds of volts provided by connecting single cells such as lithium ion batteries in series. In the high voltage battery HB, voltage of the respective single cells have dispersion in voltages thereof depending on individual differences between single cells, and a place on which the single cell is placed within the high voltage supply unit 2. Because the dispersion in the voltage is not desirable, the voltages of the respective single cells are leveled with the leveling circuit 22.

### (Power supply system)

Fig. 2 is a drawing illustrating an outline configuration of the electric vehicle (vehicle V) including the power supply system 1. The power supply system 1 shown on a left side of Fig. 2 supplies an electric power operating the leveling circuit 22 using an electric power generated by the sun light received by the solar cell unit 11. In the embodiment, the power supply system 1 is configured, as shown in Fig. 2, with the solar cell unit 11, a regulator 12, a control circuit 13, a first switch SW1, a second switch SW2, etc.

In addition, the aforementioned high voltage power supply unit 2 is configured with the high voltage battery HB, the isolated type of DC-DC converter 21, and the leveling circuit 22, etc. out of the elements shown on a right side of Fig. 2. This point is true as described with reference to Fig. 1 B. As shown in Fig. 2, the high voltage battery HB is formed with a plurality of modules (four modules in Fig. 2).
In addition, in Fig. 2, the inverter 3 is connected to the traction motor 4 through high voltage wirings of three phases.

### (Leveling circuit)

Because the leveling circuit 22 is the same as that disclosed in Patent document 1 (JP 2009-165206) filed in Japan by the same inventor who is the same person as this application, a detailed description will be omitted. However, the leveling circuit 22 performs leveling the voltage of the respective single cells (each module) using the electric power from the 12-V battery when the ignition switch (activating switch) is ON and the electric power from the solar cell unit 11 when the ignition switch is OFF. In addition the leveling circuit 22 monitors voltages of the respective single cells, and voltages of the modules provided by combination of the single cells and performs leveling the voltages on the basis of the monitored voltages.

### (Power supply system)

With reference Fig. 2, the power supply system 1 will be described more specifically. The solar cell unit 11 is a power generating device including a plurality of solar cells SC and diodes D for preventing reverse flows to generate an electric power using sun light. A power of generation of the solar cell unit 11 is sufficient with such a level that the leveling circuit 22 can be operated at least. The regulator 12 is a voltage adjusting device for adjusting the voltage supplied from the solar cell unit 11 to a constant voltage which is the same level as the 12V-battery LB. As the regulator 12, a three-terminal regulator or other regulators can be used.

The control circuit 13 is configured with a microcomputer or the like and has a function for controlling operation of the first switch SW1 and the second switch SW2. The control circuit 13 controls the first switch SW1 and the second switch SW2 while the vehicle V is inactive (when the ignition switch is OFF) and the solar cell unit 11 generates an electric power, to supply the electric power to the leveling circuit 22 from the solar cell unit 11.

The first switch SW1 is a switch for connection (ON) and cutting off (OFF) between the solar cell unit 11 and the leveling circuit and operated in response to the signal from the control circuit 13. In addition, the second switch SW2 is a switch for connecting the 12V-battery LB to the leveling circuit 22 (ON) and cutting off (OFF) which is operated in response to the signal from the control circuit 13.

As shown in Fig. 2, the solar cell unit 11 is connected to the 12V-battery LB through the regulator 12 in parallel as well as connected to the leveling circuit 22 through the isolated type of DC-DC converter 21. In addition, the connection circuit C1 connects the solar cell unit 11 to the 12V-battery LB in parallel through the regulator 12 as well as the solar cell unit 11 to the leveling circuit 22 through the isolated type of DC-DC converter 21 disposed downstream from a junction point J to the 12V-battery LB. Regarding this, if it is assumed that the isolated type of DC-DC converter 21 is a configuration element of the high voltage power supply unit 2, the connection circuit C1 extends up to the isolated type of DC-DC converter 21.

### (Operation of the power supply system)

Hereinbelow will be described an operation of the power supply system 1.
At first, when the ignition switch is ON, the control circuit 13 turns the first switch SW1 OFF to stop the electric power to be supplied to the leveling circuit 22 from the solar cell unit 11, on the other hand, turns the second switch SW2 ON to allow the electric power from the 12V-battery LB to be supplied to the leveling circuit 22 through the isolated type DC-DC converter. Accordingly, when the ignition switch is ON, the leveling circuit 22 operates with the electric power from the 12V-battery LB. In addition, the high voltage part and the low voltage part are separated with the isolated type of DC-DC converter 21.

Next, when the ignition switch is OFF, the control circuit 13 turns the first switch SW1 ON, on the other hand, turns the second switch SW2 OFF. This allows the electric power generated by the solar cell unit 11 to be supplied to the leveling circuit 22 through the isolated type of DC-DC converter 21 after the voltage is adjusted to a constant voltage of about 12V with the regulator 12. Accordingly, when the ignition switch is OFF, the leveling circuit 22 operates with the electric power generated from the natural energy supplied from the solar cell unit 11.

In addition, because the operation of the leveling circuit 22 is the same as Patent document 1, a detailed description will be omitted. For example, a storage capacitor can be increased as a whole of the high voltage battery by charging a single cell having a lowest voltage sequentially.

According to the embodiment, the electric power of the high voltage battery HB or the 12V-battery LB are not consumed only for operation of the leveling circuit 22 to level the respective single cell of the high voltage battery HB or the modules. Accordingly, though the vehicle V is left unused for a long period, the power supply system 1 can adequately perform the leveling the single cells forming the battery pack (the high voltage battery HB). In other words, the power leakage from the high voltage battery HB, which was a problem where the high voltage battery HB is used as an operation power supply for the leveling circuit 22, while the vehicle V is left and not operating can prevented. In addition, it is adequately prevented that the decrease in a remaining quantity of the whole of the battery pack (the high voltage battery HB) due to the self discharge when the ignition switch is OFF and increase in dispersion of the remaining quantity due to differences in a self discharge characteristic among the respective single cells (unbalance of charging statuses), which became problems while the 12V-battery LB was used as an operation power supply for the leveling circuit 22.

In addition, according to the embodiment, the solar cell unit 11 is connected to the high voltage supply unit 2 with the low voltage wiring L (low voltage circuit) which is isolated, which makes layout of the low voltage wiring L freely and further makes layout of the solar cell unit 11 freely. In addition, the lower the voltage, the lower a cost becomes.

In addition, it may be supposed that the high voltage battery HB is directly charged with the solar cell unit 11, and such a prior art is known. However, in this embodiment, the leveling circuit 22 is exclusively used, which eliminates the necessity of a high voltage generating circuit correspondingly provided for the whole of the high voltage battery HB, so that a low cost system can be provided. In addition, because the embodiment is not that the solar cell unit 11 is directly connected to the high voltage battery HB for charging, as described above, advantageous effects are provided in a free wiring layout and a low cost due to using the low voltage wiring L. Regarding this, as descried above, the leveling circuit 22 also can increase the remaining quantity of the high voltage battery HB as a whole by leveling by increasing the voltage of the single cell having the lowest voltage.

Regarding this, the isolated type of the DC-DC converter 21 becomes necessary when the 12-V battery LB is used as the operation power supply for the leveling circuit 22, and thus, is not specially added when the solar unit 11 is used as the power supply. Accordingly, as described above, the power supply system 1 can be provided at a low cost.

### (Others)

In addition, the embodiment has been described with assumption that the power supply system 1 includes the first switch SW1 and the second switch SW2. However, the second switch SW2 may be provided as another configuration separated from the configuration of the power supply system 1 (original configuration). In other words, the second switch SW2 as another configuration element may be concurrently used in the power supply system 1. In the embodiment, it is assumed that the control circuit 13 controls the second switch SW2 between ON and OFF, however, the control may be provided by another microcomputer or the like different from the control circuit 13. More specifically, the control may be provided by that another microcomputer turns the second switch SW2 OFF different from the control circuit 13 when the ignition switch becomes OFF.

In addition, regarding the control circuit 13, it may be possible that the control circuit 13 automatically operates when a voltage of the power generated by the solar cell unit 11 becomes equal to or greater than a predetermined value, while the ignition switch is OFF. In addition, it may be possible that the first switch SW1 (and the second switch SW2) are turned ON/OFF when an output of a photodetection sensor becomes equal to or greater than a threshold in which a photodetection sensor or the like is connected to the control circuit 13. In other words, "when the solar cell generates power" in claims has various modifications.

In addition, the embodiment has been described with an example in which the high voltage power supply unit 2 is installed under the floor of the vehicle V. However, the high voltage power supply unit 2 may be installed in a cabin such as a trunk part or in a floor surface. This is also applicable to the following modifications.

### (Modifications)

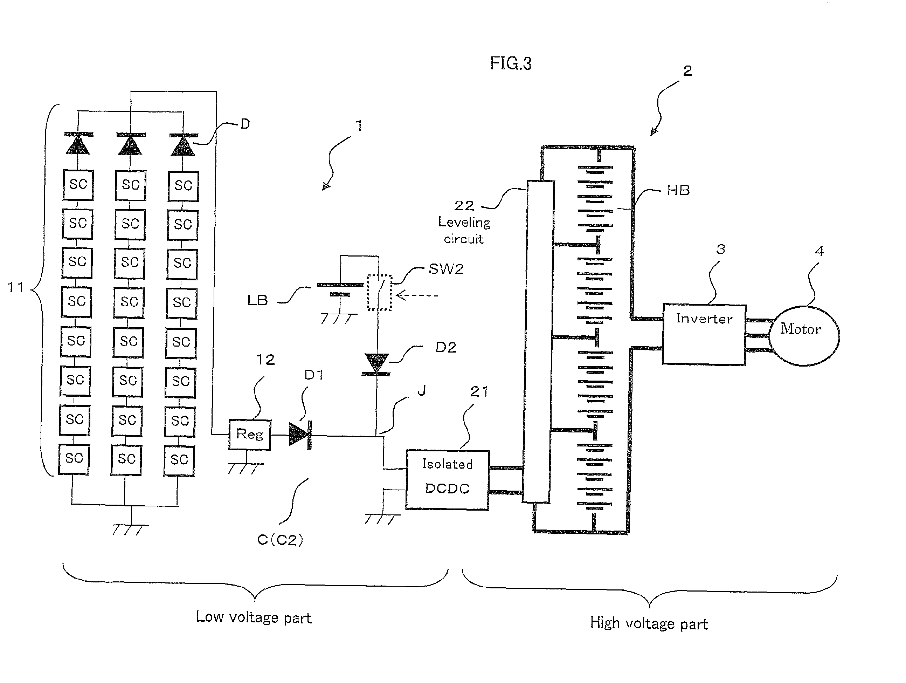

Next, with reference to Fig. 3 will be described modifications of the embodiment. In Fig. 3, parts having the same configurations as those in the embodiment (Fig. 2) are designated with the same reference, and thus a description about the part will be omitted.

In a power supply system 1 of a modification shown in Fig. 3, a connection circuit C is different from the connection circuit C1 in the embodiment (example of the embodiment). More specifically, in a connection circuit C2 in the modification a first diode D1 is installed between the regulator 12 and the junction J in place of the control circuit 13 and the first switch SW1. In addition, a second diode D2 is installed between the second switch SW2 and the junction J. More specifically, the modification shown in Fig. 3 has a configuration in which the second embodiment is simplified. In addition the second switch SW2 is not related to control in the power supply system 1, turned OFF by turning OFF of the ignition switch, and turned ON by turning the ignition switch ON.

According to the configuration, as long as the solar cell unit 11 generates an electric power, the electric power from the solar cell unit 11 to the leveling circuit 22 through the first diode though the electric power from the 12V-battery LB is cut off because the second switch SW2 is turned OFF during inactivation (when the ignition switch is OFF). Accordingly, for example, though the vehicle V is left with the ignition switch being turned OFF, the leveling circuit 22 operates to level the voltages in the high voltage battery HB (single cells or modules) because the leveling circuit 22 operates as long as the solar cell unit 11 generates an electric power.

For supplement, the leveling circuit 22 performs level when the voltage differences among single cells in the high voltage battery HB become larger than a predetermined threshold, or when the difference in voltage among the modules of the high voltage battery HB become larger than a predetermined threshold. In this operation the leveling circuit 22 consumes the electric power from the solar cell unit 11. In addition, the leveling circuit 22 generally consumes the electric power to monitor the voltages. In the aforementioned embodiment and this modification, both electric powers can be supplied from the solar cell unit 11.

Regarding this, as shown in Fig. 3, because of the presence of the second diode D2 in the connection circuit C2, the electric power generated by the solar cell unit 11 is supplied only to the leveling circuit 22 as similar to the first embodiment, so that the leveling circuit 22 can be surely operated.

### INDUSTRIAL APPLICABILITY

The present invention has a high applicability as a technology applicable to electric vehicles that or the like will become more popular.

### [Description of Characters]

- V: vehicle (electric vehicle)
- HB: high voltage battery
- LB: 12V-battery (low voltage battery)
- 1: power supply system
- 11: solar cell unit (solar cell)
- 12: regulator
- 13: control circuit
- C: connection circuit
- C1: connection circuit (example of embodiment)
- C2: connection circuit (modification)
- J: junction point
- L: low voltage wiring
- SW1: first switch
- SW2: second switch
- 2: high voltage power supply unit
- 21: isolated type of a DC-DC converter (converter)
- 22: leveling circuit
- 4: traction motor (motor for travelling)

## Claims

1. A power supply system comprising:
a high voltage battery including a plurality of single cells in combination, each capable of being charged and discharged for supplying an operation power to a traction motor;
a low voltage battery configured to supply an operation electric power to a control unit and an accessory unit;
a leveling circuit configured to level dispersion in voltages of respective single cells in the high voltage battery, the leveling circuit operating with an electric power supplied from the low voltage battery;
a solar cell installed on a vehicle;
a regulator configured to approximately adjust a voltage of the solar cell to a level of a voltage of the low voltage battery;
a converter configured to convert an output voltage of the regulator and an output voltage of the low voltage battery into an operation voltage of the leveling circuit; and
a connection circuit configured to connect the solar cell to the low voltage battery in parallel through the regulator as well as connect the solar cell to the leveling circuit through the converter disposed on a side downstream from a junction point between the low voltage battery and the solar cell, wherein
the electric power is supplied to the leveling circuit from the solar cell when an activation switch of the vehicle is OFF and inactive.

2. The power supply system as claimed in claim 1, further comprising:
a first switch configured to connect the solar cell to the leveling circuit and cut off the solar cell from the leveling circuit in the connection circuit, and
a control circuit configured to control the first switch when the vehicle is inactive and the solar cell generates an electric power so as to supply the electric power to the leveling circuit from the solar cell.

3. The power supply system as claimed in claim 1, wherein
the solar cell is installed on a top exterior surface of the vehicle, wherein
a high voltage source unit including the high voltage battery, the converter, and the leveling circuit is installed in a cabin of the vehicle or under a floor of the vehicle, and wherein
the solar cell and the high voltage source unit are connected with a low voltage circuit using a low voltage wiring grounded to a body of the vehicle.

4. The power supply system as claimed in claim 2, wherein:
the solar cell is installed on a top exterior surface of the vehicle, wherein
a high voltage source unit including the high voltage battery, the converter, and the leveling circuit is installed in a cabin of the vehicle or under a floor of the vehicle, and wherein
the solar cell and the high voltage source unit are connected with a low voltage circuit using a low voltage wiring grounded to a body of the vehicle.

5. The power supply system as claimed in any of claims 1 to 4, wherein the converter comprises an isolated type of DC-DC converter.

6. An electric vehicle comprising the power supply system as claimed in any of claims 1 to 4.
